(19) Europäisches Patentamt
European Patent Office
Office européen des brevets

(11) EP 4 645 618 A1

(12) **EUROPÄISCHE PATENTANMELDUNG**

(43) Veröffentlichungstag:
**05.11.2025 Patentblatt 2025/45**

(21) Anmeldenummer: **24173280.9**

(22) Anmeldetag: **30.04.2024**

(51) Internationale Patentklassifikation (IPC):
***H02H 1/00*** $^{(2006.01)}$ ***H02H 3/00*** $^{(2006.01)}$
***H02H 7/26*** $^{(2006.01)}$

(52) Gemeinsame Patentklassifikation (CPC):
**H02H 7/261; H02H 1/0092; H02H 3/006**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft**
**80333 München (DE)**

(72) Erfinder:
- **Hammer, Thomas**
**91334 Hemhofen (DE)**
- **Lin, Guosong**
**91056 Erlangen (DE)**

(74) Vertreter: **Siemens Patent Attorneys**
**Postfach 22 16 34**
**80506 München (DE)**

(54) **VERFAHREN UND VORRICHTUNG ZUM PARAMETRIEREN VON SCHUTZGERÄTEN EINES ENERGIEVERSORGUNGSNETZWERKS**

(57) Die Erfindung betrifft ein Verfahren zum Parametrieren von Schutzgeräten (20, 22, 24, 26, 28, 30) eines Energieversorgungsnetzwerks (10), an welches eine Mehrzahl von Einrichtungen (12, 14, 16, 18) angeschlossen ist, von denen wenigstens eine Energie vom Energieversorgungsnetzwerk empfängt und wenigstens eine Energie an das Energieversorgungsnetzwerk abgibt, und welches eine Mehrzahl von Schaltgeräten (32, 34, 36, 38, 40, 42) zum Steuern einer Energieverteilung innerhalb des Energieversorgungsnetzwerks aufweist, wobei Schaltzustände der Schaltgeräte zu einem vorgegebenen Zeitpunkt einen jeweiligen Netzzustand des Energieversorgungsnetzwerks bilden, wobei jedes Schutzgerät für einen jeweiligen Netzzustand des Energieversorgungsnetzwerks einen Netzzustands-spezifischen Parametersatz nutzt, um für diesen Netzzustand eine gewünschte Schutzfunktion durch das jeweilige Schutzgerät zu realisieren. Weiterhin betrifft die Erfindung eine Vorrichtung zur Durchführung des Verfahrens. Die Stabilität und die Zuverlässigkeit eines Energieversorgungs-Netzwerks werden durch die Erfindung konkret verbessert, weil passend zu einem Netzzustand die Schutzgeräte automatisch adaptiv parametriert werden. Die Erfindung stellt eine Technik zur Verfügung, mit der über eine Kommunikation eine dem aktuellen Netzzustand direkt angepasste Parametrierung automatisiert in den jeweiligen Schutzgeräten erfolgt.

FIG 1

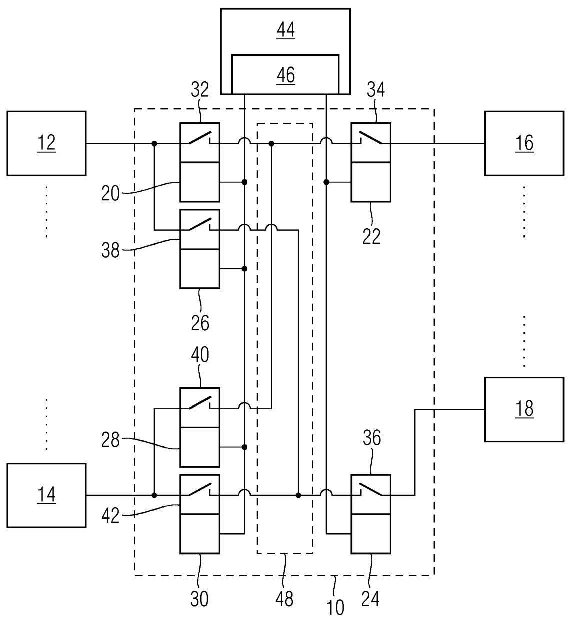


EP 4 645 618 A1

## Beschreibung

Technisches Gebiet

Die Erfindung betrifft ein Verfahren zum Parametrieren von Schutzgeräten eines Energieversorgungsnetzwerks, an welches eine Mehrzahl von Einrichtungen angeschlossen ist, von denen wenigstens eine Energie vom Energieversorgungsnetzwerk empfängt und wenigstens eine Energie an das Energieversorgungsnetzwerk abgibt, und welches eine Mehrzahl von Schaltgeräten zum Steuern einer Energieverteilung innerhalb des Energieversorgungsnetzwerks aufweist, wobei Schaltzustände der Schaltgeräte zu einem vorgegebenen Zeitpunkt einen jeweiligen Netzzustand des Energieversorgungsnetzwerks bilden, wobei jedes Schutzgerät für einen jeweiligen Netzzustand des Energieversorgungsnetzwerks einen Netzzustands-spezifischen Parametersatz nutzt, um für diesen Netzzustand eine gewünschte Schutzfunktion durch das jeweilige Schutzgerät zu realisieren. Weiterhin betrifft die Erfindung eine Vorrichtung zur Durchführung des Verfahrens.

Technischer Hintergrund

Bei Änderungen der Schaltzustände eines Energieversorgungsnetzwerks, beispielsweise bei einer Teilnetzbildung, erfolgt eine Umparametrierung der Schutzgeräte, um sich auf die neue Netzsituation, die veränderten Leistungsflüsse, einzustellen. Grundsätzlich wächst die Anzahl der Netzzustände mit der Anzahl der in einem Energieversorgungsnetzwerk vorhandenen Schalter nicht linear, sondern exponentiell an. Deshalb und infolge der vielen kleinen und dezentralen Stromerzeuger, die Überschüsse in das Energieversorgungsnetzwerk einspeisen, haben sich die Veränderungen der Netzzustände in letzter Zeit vervielfacht. Mit dieser wachsenden Anzahl an Netzzuständen entstehen irgendwann Probleme bei der Umparametrierung der Parametersätze der Schutzgeräte, damit weiterhin die Schutzparameter zu jedem Schaltzustand passend eingestellt sind.

Standardmäßig ist die Schutztechnik nicht in die Betriebsführung eingebunden. Die Schutzgeräte arbeiten autark entsprechend ihrer durch den Schutztechniker bei der Inbetriebnahme oder bei einer manuellen Änderung gesetzten Parametrierung. Die Parametersätze werden durch den Schutztechniker mithilfe geeigneter Softwarepakete berechnet. Dabei ist aber keine Automatisierung vorhanden, d.h. automatisierter adaptiver Netzschutz ist mit den jetzigen Mitteln nicht realisierbar.

In der Regel werden bislang die Parametersätze einmal fest installiert und dann nicht mehr verändert, weil auch kaum Wechsel in der Netzsituation besteht. Dies hat sich in den letzten Jahren fundamental verändert. So gibt es jetzt, nicht zuletzt wegen der vielen kleinen und dezentralen Stromerzeuger viele Wechsel der Netzsituation und es die herkömmliche Technik zur Umparametrierung der Schutzgeräte ist mittlerweile zu unflexibel, um der wachsenden Anzahl an Netzzuständen gerecht zu werden, weil die Parametersätze, einmal fest installiert, dann nicht mehr verändert werden, außer neue Parametersätze werden direkt von Ort von einem Schutztechniker - wiederum in der Regel manuell - eingespeist.

## Zusammenfassung der Erfindung

Aufgabe der vorliegenden Erfindung ist es daher, ein Verfahren und eine Vorrichtung zur Automatisierung der Adaption von Parametersätzen in Schutzgeräten anzugeben, damit die Schutztechnik durch automatisiert adaptierte Umparametrierung der wachsenden Anzahl an Netzzuständen in einem Energieversorgungsnetzwerk wegen der unüberschaubaren Vielzahl kleiner dezentraler Energieerzeuger gerecht wird. Deshalb ist es auch Aufgabe der Erfindung, die Anzahl der erforderlichen Schreiboperationen in einem Schutzgerät so gering wie möglich zu halten.

Diese Aufgabe(n) wird/werden durch das Verfahren und die Vorrichtung gemäß der Erfindung gelöst.

Entsprechend ist ein Verfahren zur Parametrierung von Schutzgeräten eines Energieversorgungsnetzwerks Gegenstand der Erfindung derart, dass an einen Leitstand des Energieversorgungsnetzwerks eine Mehrzahl von Einrichtungen angeschlossen ist, von denen wenigstens eine Energie vom Energieversorgungsnetzwerk empfängt und wenigstens eine Energie an das Energieversorgungsnetzwerk abgibt, und welches eine Mehrzahl von Schaltgeräten zum Steuern der Energieverteilung innerhalb des Energieversorgungsnetzwerks aufweist, wobei Schaltzustände der Schaltgeräte zu einem vorgegebenem Zeitpunkt einen jeweiligen Netzzustand des Energieversorgungsnetzwerks ergeben, wobei eine Mehrzahl von Schutzgeräten für die Schaltgeräte vorgesehen sind und jedes Schutzgerät für den jeweiligen Netzzustand des Energieversorgungsnetzwerks einen Netzzustands-spezifischen Parametersatz nutzt, um für diesen Netzzustand eine gewünschte Schutzfunktion durch das jeweilige Schutzgerät zu gewährleisten,

dadurch gekennzeichnet, dass
in dem jeweiligen Schutzgerät zumindest drei Parametergruppen, in denen jeweils Parametersätze gespeichert sind, definiert sind,

wobei eine Parametergruppe als Default-Parametergruppe eine Rückfallebene abbildet und zumindest zwei weitere Parametergruppen im Schutzgerät vorgesehen sind, wobei im Energieversorgungsnetzwerk nur eine Parametergruppe aktiv ist und die Schutzgeräte, mittels Kommunikation zu dem Leitstand, von dort, gegebenenfalls über die Einrichtung zum Ermitteln eines geeigneten Parametersatzes einen aktuell adaptierten Parametersatz und/oder den Steuer-Befehl zur aktiv-Schaltung einer bereits im Schutzgerät vorhandener Parametergruppe empfangen und in einem darauf folgenden optionalen Verfahrensschritt eine inaktive Parametergruppe, außer der Default-Parametergruppe, damit überschreiben und nach gegebenenfalls erfolgter Überschreibung der Parametergruppe im Schutzgerät auf die Parametergruppe umgeschaltet wird, die den vom Leitstand als geeignet kommunizierten Parametersatz enthält.

Darüber hinaus ist Gegenstand der vorliegenden Erfindung eine Vorrichtung zum Ermitteln und Weiterleiten von Parametersätzen für Schutzgeräte eines

Energieversorgungsnetzwerkes, an welches eine Mehrzahl von Einrichtungen angeschlossen ist, von denen wenigstens eine Energie vom Energieversorgungsnetzwerk empfängt und wenigstens eine Energie an das Energieversorgungsnetzwerk abgibt, und welches eine Mehrzahl von Schaltgeräten zum Steuern einer Energieverteilung innerhalb des Energieversorgungsnetzwerks aufweist, wobei Schaltzustände der Schaltgeräte zu einem vorgegebenem Zeitpunkt einen jeweiligen Netzzustand des

Energieversorgungsnetzwerks bilden, wobei jedes Schutzgerät für einen jeweiligen Netzzustand des Energieversorgungsnetzwerks einen Netzzustandsspezifischen Parametersatz nutzt, um für diesen Netzzustand eine gewünschte Schutzfunktion durch das jeweilige Schutzgerät zu gewährleisten,

dadurch gekennzeichnet, dass

die Vorrichtung die Mittel hat und geeignet ist, eine Datenbank mit Parametersätzen zu berechnen und aufzubauen, den Inhalt der Datenbank von Parametersätzen des Energieversorgungsnetzwerks, die anhand von Prognosen vorausberechnet sind, mit dem Leitstand einerseits und mit den Schutzgeräten des Energieversorgungsnetzwerks andererseits bereitzustellen, wobei die Mittel zur Berechnung und zum Aufbau der Parametersätze der Datenbank in regelmäßigen Zeitabständen Ergebnisse von Prognosen empfängt, die wahrscheinliche Netzzustände und entsprechend dazu passende Parametersätze betreffen.

Die allgemeine Erkenntnis der Erfindung ist es, dass eine Umparametrierung optional die Überschreibung eines aktuellen Parametersatzes einer Parametergruppe in einem Schutzgerät umfasst, wobei die Schreiboperation im Schutzgerät nur in inaktiven Parametergruppen stattfinden kann, das Risiko von Fehlern birgt und zeitintensiv ist. Nach optionaler Überschreibung erfolgt eine durch den Leitstand ausgelöste Umparametrierung, wobei auch wieder ein Risiko besteht, dass die Aktivierung der Parametergruppe mit dem überschriebenen Parametersatz scheitert. Wenn aber diese Aktivierung bei nur einem Schutzgerät des Energieversorgungsnetzwerks misslingt, dann wird automatisch bei allen Schutzgeräten des betroffenen Energieversorgungsnetzwerks die Default-Parametergruppe aktiviert, damit das Netz stabil bleibt.

**Ausgestaltungen der Erfindung**

"Mittel zur Berechnung der Parametersätze" ist beispielsweise ein System, umfassend Sensor(en), Anschlüsse, Leitungen und/oder zumindest einen Prozessor, wobei ein oder mehrere optional vorliegende Sensor(en) geeignet ist/sind, Messungen durchzuführen, die Voraussagen über die voraussichtlichen Umgebungs-Bedingungen, wie Wind, Temperatur, Druck, relative und absolute Feuchtigkeit, UV-Strahlung, Ozonwerte und Weiteres in der durch das Energieversorgungsnetzwerk abgedeckten Region erlauben und entsprechende Daten über Leitungen an den oder die Prozessor(en) zu übermitteln. Diese Daten können ebenso über einen entsprechenden Zugang zum IoT dem System zugänglich gemacht werden. Der Prozessor ist seinerseits geeignet und konfiguriert, um auf der Grundlage dieser variablen Daten und einer vorgegebenen Energieversorgungsnetzwerks-Topologie zu erwartende Netzzustände zu berechnen und geeignete Parametersätze zu ermitteln, die dann - beispielsweise - in der Datenbank gespeichert und dem System zugänglich gemacht werden. Diese Mittel zur Berechnung der Parametersätze sind Teil einer "Einrichtung zum Ermitteln eines geeigneten Parametersatzes".

Zu der "Einrichtung zum Ermitteln eines geeigneten Parametersatzes" gehört außerdem ein Zugang zur Datenbank mit den gespeicherten, bereits berechneten und im dem Energieversorgungsnetzwerk zugänglich gemachten Parametersätzen. Diese Parametersätze sind entweder allgemein gültig und/oder für das betroffene Energieversorgungsnetzwerk angepasst und bereits berechnet, so dass sie für unterschiedliche Netzzustände zentral über die Einrichtung zum Ermitteln eines geeigneten Parametersatzes abrufbar sind.

Beispielsweise verfügt die Vorrichtung über eine Einrichtung zum Ermitteln eines geeigneten Parametersatzes und damit über einen Zugang zu einem Prozessor oder einer Rechnereinheit mit neuronalem Netz, an dem eine KI

ausführbar ist.

Beispielsweise verfügt die Vorrichtung über einen Zugang zu IoT (Internet of Things), um Daten von Wetterbeobachtungen und/oder Wetterprognosen abrufen zu können. Beispielsweise ist es dabei möglich, über das IoT eine Vielzahl und Vielfalt von Sensoren, Kameras, Mess- und Geodatengeräten mit dem Leitstand des Energieversorgungsnetzwerks zu verbinden, so dass fundierte Prognosen über die wahrscheinliche Menge an Stromeinspeisung durch viele kleine Stromerzeuger ins Energieversorgungsnetzwerk und/oder der Stromverbrauch vieler Energieabnehmer prognostizierbar und/oder berechenbar wird.

Als "Netzwerks-Topologie" wird die physische und/oder logische Anordnung aller Geräte und/oder Leitungen in einem Energieversorgungsnetzwerk bezeichnet.

Nach einer weitere beispielhaften Ausführungsform der Erfindung werden die Prognosen der zu erwartenden Netzzustände durch Nutzung eines rekurrenten neuronalen Netzwerks erstellt.

Nach einer Ausführungsform umfassen die Prognosen Daten, welche Netzzustände des Energieversorgungsnetzwerks aufgrund der Grundlast und/oder der regionalen Entwicklung des Wetters, z.B. Wetter, Wind und Sonne, Ladezustände größerer Speicher, vermutliche Menge an Stromeinspeisung und/oder Stromverbrauch der am Energieversorgungsnetzwerk angeschlossenen Einrichtungen und Verfügbarkeit größerer flexibler Speicherkapazitäten im Netz am wahrscheinlichsten sind.

Da die aktuelle Last abhängig von der Zeit und der vorherigen Last ist:

$$S_t = f(X_t, S_{t-1}),$$

wird nach einer Ausführungsform ein rekurrentes neuronales Netzwerk "recurrent neural network (RNN)" für die Prognose verwendet.

Die zu einem Netzzustand, charakterisiert durch einen Fingerprint, gehörigen Schutzparameterdatensätze werden in den Parametergruppen 2 ... n der koordinierten Schutzgeräte gespeichert. Im Fall einer Netzzustandsänderung wird dementsprechend geprüft, ob und in welcher Parametergruppe $2 \leq k \leq n$ für den Fingerprint des neuen Netzzustandes in den Schutzgeräten bereits Schutzparameterdatensätze hinterlegt sind. Wenn das der Fall ist, reicht eine einfache Umschaltung der aktivierten Parametergruppe auf k, wenn nicht, ist die als am unwahrscheinlichsten zutreffende identifizierte Parametergruppe mit zu dem Fingerprint passenden Schutzparametern zu überschreiben, bevor umgeschaltet wird.

Jeder Netzzustand i kann durch einen Fingerprint FPi beschrieben werden, der für die Menge aller Schalter k = 1 ... ns die Schaltzustände Sk enthält: Fingerprint $FP_i$: $\{S_1, S_2 \ldots S_{ns}\}$ )
wobei Schaltzustände der Schaltgeräte die möglichen Netzzustände des Energieversorgungsnetzwerkes bestimmen.

Nach einer Ausführungsform der Erfindung wird im Energieversorgungsnetzwerk eine Kommunikationsvorrichtung betrieben, in der kontinuierlich ein Abgleich zwischen den Netzzuständen und den aktivierten Parametersätzen durchgeführt wird.

Nach einer Ausführungsform der Erfindung wird im Energieversorgungsnetzwerk eine Kommunikationsvorrichtung betrieben, in der kontinuierlich ein Abgleich zwischen den prognostizierten Netzzuständen und den aktivierten Parametersätzen durchgeführt wird.

Dabei kann der eine und/oder der andere oben genannte Abgleich in regelmäßigen zeitlichen Abständen erfolgen, beispielsweise 50-, 25-, 10-, 5- oder nur einfach pro Tag.

Nach einer beispielhaften Ausführungsform der Erfindung werden Parametersätze aller Schutzgeräte für unterschiedliche und/oder alle denkbaren und/oder alle sinnvollen Netzzustände eines bestimmten Energieversorgungsnetzwerks oder einer Reihe von Energieversorgungsnetzwerken in einem Schutzdatenmanagement-System zentral gespeichert.

Es wird ferner vorgeschlagen, dass die Parametersätze zentral durch die Einrichtung zum Ermitteln von geeigneten Parametersätzen für Schutzgeräte in einer Datenbank abrufbar gespeichert werden. Die Parametersätze können somit jederzeit bei Bedarf abgerufen und genutzt werden. Bei Änderungen am Netzzustand des Energieversorgungsnetzwerks können die Parametersätze sehr einfach und schnell verfügbar gemacht werden, weil sie beispielsweise lediglich aus der Datenbank abgerufen zu werden brauchen.

Weiterhin wird vorgeschlagen, dass die Einrichtung zum Ermitteln von Parametersätzen für Schutzgeräte den Netzzustand des Energieversorgungsnetzwerks ermittelt und abhängig vom ermittelten Netzzustand die Parametersätze an die Schutzgeräte übermittelt. Hierzu ist die Einrichtung zum Ermitteln von Parametersätzen für Schutzgeräte vorzugsweise mit dem Energieversorgungsnetzwerk gekoppelt, beispielsweise nach Art eines Online-Modus, sodass einrichtungsseitig Daten in Bezug auf den aktuellen Netzzustand des Energieversorgungsnetzwerks verfügbar sind. Nachdem der Netzzustand ermittelt ist und aus der Datenbank die passenden, insbesondere auch schalterreduzierten Parametersätze abgerufen sind, können die entsprechenden Parametersätze an die jeweiligen Schutzgeräte übermittelt werden, die diese Parametersätze dann anwenden beziehungsweise nutzen.

Dabei ist nach einer Ausführungsform vorgesehen, dass der Leitstand mit der Einrichtung zur Ermittlung von Parametersätzen Zugriff auf die im Schutzdatenmanagement-System zentral gespeicherten Parametersätze hat.
Aufgrund eines Fehlers z. B. Ausfall der Kommunikation zwischen Leitstand und Schutzgerät oder Ausfall der Kommunikation zwischen Leitstand und Datenbank, grundsätzlich, wenn die Adaptierung des Parametersatzes einer Parametergruppe nicht erfolgreich durchgeführt werden kann, wird in allen Schutzgeräten des in Rede stehenden
Energieversorgungsnetzwerkes die Rückfallebene, die "Default-Parametergruppe" mit einem Rückfall-Parametersatz aktiviert, was für den adaptiven Schutz wichtig ist, insbesondere, um die Koordination und/oder die Netzspannung im betroffenen Energieversorgungsnetzwerk zu erhalten.

- Minimale Parametergruppen im Schutzgerät: Beispiel: Pro Schutzgerät liegen drei Parametergruppen vor: Bei erfolgreicher Adaptierung wird das Netz mit dem aktuellen Netzzustand durch spezifisch an den aktuellen Netzzustand angepasste Parameter geschützt.

- Rückfallebenen-Konzept: Die Schutzgeräte erkennen selbständig fehlende oder fehlerhafte Kommunikation zum Leitstand und schalten, während des Ausfalls der Kommunikation zwischen Leitstand und Schutzgerät, automatisch zur Default-Parametergruppe, wo allgemeine Schutzparameter hinterlegt sind. Durch die Aktivierung der Default-Parametergruppe wird das Energieversorgungsnetz selbst dann, wenn der Netzzustand sich ändert, durch den allgemeinen Parametersatz stabil gehalten und geschützt.

- Wenn Fehler während der Adaptierung der Parametersätze auftauchen und/oder eine Umparametrierung, eine Über-Schreiboperation und/oder die Aktivierung eines abgeänderten Parametersatzes misslingt, werden die Rückfallebenen-Funktionen, insbesondere die Aktivierung der Default-Parametergruppe, durchgeführt. Das Netz wird dadurch stabil gehalten und geschützt.

- Mehr als drei Parametergruppen:
  Durch eine Prognose kann man einen zusätzlichen und wahrscheinlich richtig adaptierten Parametersatz in einem Schutzgerät bereitstellen und so die UmParametrierungen des Schutzgeräts reduzieren.

**Exemplarische Ausführungsbeispiele der Zeichnung**

Bei den im Folgenden erläuterten Ausführungsbeispielen handelt es sich um Ausführungsformen der Erfindung. Die vorhergehend in der Beschreibung angegebenen Merkmale, Merkmalskombinationen sowie auch die in der folgenden Beschreibung von Ausführungsbeispielen genannten und/oder in den Figuren gezeigten Merkmale und Merkmalskombinationen sind nicht nur in der jeweils angegebenen Kombination, sondern auch in anderen Kombinationen verwendbar. Es sind somit auch Ausführungen von der Erfindung umfasst beziehungsweise als offenbart anzusehen, die in den Figuren nicht explizit gezeigt und erläutert sind, jedoch durch separierte Merkmalskombinationen aus den erläuterten Ausführungsformen hervorgehen und erzeugbar sind. Die anhand der Ausführungsbeispiele dargestellten Merkmale, Funktionen und/oder Wirkungen können für sich genommen jeweils einzelne, unabhängig voneinander zu betrachtende Merkmale, Funktionen und/oder Wirkungen der Erfindung darstellen, welche die Erfindung jeweils auch unabhängig voneinander weiterbilden. Daher sollen die Ausführungsbeispiele auch andere Kombinationen als die in den erläuterten Ausführungsformen umfassen. Darüber hinaus können die beschriebenen Ausführungsformen auch durch weitere der bereits beschriebenen Merkmale, Funktionen und/oder Wirkungen der Erfindung ergänzt sein.
In den Figuren bezeichnen gleiche Bezugszeichen gleiche Merkmale und Funktionen.
Es zeigen:

FIG 1 zeigt den Stand der Technik und eine schematische Blockschaltbilddarstellung eines elektrischen Energieversorgungsnetzwerks mit daran angeschlossenen elektrischen Einrichtungen, wobei das Energieversorgungsnetzwerk zum Steuern eines Energieflusses elektrische Schaltgeräte und Schutzgeräte aufweist;

Fig. 2 zeigt 4 Zeitpunkte und 4 Szenarien, die typische Umparametrier- und Umschalte-Prozesse in einem der Schutzgeräte 20 bis 30 aus Figur 1 in Gang setzen; und

Fig. 3 zeigt einen Ausschnitt aus dem Kommunikationsnetz innerhalb eines beispielhaften Energieversorgungsnetzwerks - wie z.B. in Figur 1 dargestellt.

Detaillierte Beschreibung der Ausführungsbeispiele

FIG 1 zeigt in einer schematischen Blockschaltbilddarstellung ein elektrisches Energieversorgungsnetzwerk 10

mit daran angeschlossenen elektrischen Einrichtungen 12, 14, 16, 18. Bei den elektrischen Einrichtungen 12, 14, 16, 18 kann es sich um elektrische Verbraucher, beispielsweise eine Industrieanlage oder dergleichen, eine lokale Unterversorgung für einen Ortsteil einer Stadt, eine Windkraftanlage und/oder dergleichen handeln. Wenigstens eine der Einrichtungen 12, 14, 16, 18 kann elektrische Energie erzeugen, die durch wenigstens eine andere der elektrischen Einrichtungen 12, 14, 16, 18 verbraucht werden kann. Während des bestimmungsgemäßen Betriebs der Einrichtungen 12, 14, 16, 18 kann eine jeweilige der Einrichtungen 12, 14, 16, 18 ihren Betriebszustand hinsichtlich des Energieverbrauchs auch ändern. So kann es zum Beispiel bei der Industrieanlage auftreten, dass diese in einem bestimmten Zeitraum elektrische Energie abgibt, wohingegen sie in einem anderen Zeitraum elektrische Energie aufnimmt.

Die elektrischen Einrichtungen 12, 14, 16, 18 sind an das Energieversorgungsnetzwerk 10 angeschlossen. Über das Energieversorgungsnetzwerk 10 wird die elektrische Energie zwischen den Einrichtungen 12, 14, 16, 18 verteilt. In FIG 1 sind lediglich vier Einrichtungen 12, 14, 16, 18 dargestellt. Es ist jedoch möglich, dass erheblich mehr elektrische Einrichtungen an das elektrische Energieversorgungsnetzwerk 10 angeschlossen sind.

Um das Verteilen der elektrischen Energie zwischen den Einrichtungen 12, 14, 16, 18 zu erreichen, stellt das Energieversorgungsnetzwerk 10 entsprechende elektrische Verbindungen unter Nutzung von elektrischen Leitungen her, die mittels Schaltgeräten 32, 34, 36, 38, 40, 42 des Energieversorgungsnetzwerks 10 gesteuert werden können. Diese machen die elektrischen Leitungen einer Netzwerktopologie 48 des Energieversorgungsnetzwerks 10 bedarfsweise verfügbar.

Das Energieversorgungsnetzwerk 10 weist ferner Schutzgeräte 20, 22, 24, 26, 28, 30 auf, die vorliegend jeweiligen Schaltgeräten 32, 34, 36, 38, 40, 42 zugeordnet sind. In alternativen Ausführungsbeispielen kann dies auch anders sein, indem Schutzgeräte unabhängig von Schaltgeräten angeordnet sein können. Für die Erfindung ist dies jedoch nicht relevant.

Die Schutzgeräte 20, 22, 24, 26, 28, 30 dienen dazu, eine oder mehrere Zustandsdaten des Energieversorgungsnetzwerks 10, wie zum Beispiel einen elektrischen Strom, eine elektrische Spannung, eine Temperatur und/oder dergleichen, an einer bestimmten lokalen Position zu erfassen und Schaltmaßnahmen, beispielsweise in Bezug auf die Schutzgeräte 20, 22, 24, 26, 28, 30, einzuleiten. Darüber hinaus stehen die Schutzgeräte 20 bis 30 mit einem Leitstand 44 des Energieversorgungsnetzwerks 10 in Kommunikationsverbindung.

Die Kommunikationsverbindung findet beispielsweise über die Stationsleittechnik 160, 162 - siehe Figur 3 - statt.

Die Schaltzustände der Schaltgeräte 32 bis 42 zu einem vorgegebenen Zeitpunkt bilden einen jeweiligen Netzzustand des Energieversorgungsnetzwerks 10. Jedes Schutzgerät 20 bis 30 nutzt für einen jeweiligen Netzzustand des Energieversorgungsnetzwerks 10 einen jeweiligen individuellen, Netzzustands-spezifischen Parametersatz, um für diesen Netzzustand eine gewünschte Schutzfunktion durch das jeweilige Schutzgerät 20 bis 30 zu realisieren.

Die Schaltgeräte 32 bis 42 können zum Beispiel als Leistungsschalter, als Lastschalter oder auch als Trennschalter ausgebildet sein. Es können auch Kombinationen hiervon als Schaltgerät 32 bis 42 vorgesehen sein. Die Schaltgeräte 32 bis 42 brauchen nicht identisch ausgebildet zu sein.

Der Leitstand 44 weist eine Einrichtung 46 zum Ermitteln eines geeigneten Parametersatzes für die Schutzgeräte 20 bis 30 des Energieversorgungsnetzwerks 10 aus. Die Einrichtung 46 zum Ermitteln eines geeigneten Parametersatzes ist ausgebildet, für wenigstens eines der Schutzgeräte 20 bis 30 die betriebszustandsspezifischen Parametersätze auszuwerten, um schaltgerätereduzierte Parametersätze zu ermitteln, die unabhängig von Schaltzuständen wenigstens eines der Schaltgeräte 32 bis 42 sind. Dies wird im Folgenden noch weiter erläutert.

Die Schutzgeräte 20 bis 30 stehen -z.B. auch über die Einrichtung 46 zum Ermitteln eines geeigneten Parametersatzes für die Schutzgeräte 20 bis 30 - in Kommunikationsverbindung mit dem Leitstand 44, sodass Daten und/oder Signale von den Schutzgeräten 20 bis 30 abgerufen, empfangen, gesendet und/oder angefordert werden können. Zugleich können Parametersätze vom Leitstand 44 an die jeweiligen Schutzgeräte 20 bis 30 übermittelt werden, sodass die Schutzgeräte 20 bis 30 ihre Schutzfunktion angepasst an den jeweils aktuellen betriebszustandsspezifischen Parametersatz einstellen können.

Zu diesem Zweck kann einerseits vorgesehen sein, dass der jeweils anzuwendende Netzzustands-spezifische Parametersatz vom Leitstand 44 an das jeweilige Schutzgerät 20 bis 30 übermittelt wird, sodass das jeweilige Schutzgerät 20 bis 30 den empfangenen betriebszustandsspezifischen Parametersatz aktuell, vorzugsweise unmittelbar, anwendet. Andererseits kann vorgesehen sein, dass der jeweils anzuwendende Netzzustands-spezifische Parametersatz im Schutzgerät schon in einer Parametergruppe hinterlegt ist.

Beispielsweise nach einer Ausführungsform ist Teil des Kommunikationsnetzes auch die Einrichtung 46 zum Ermitteln eines geeigneten Parametersatzes, über die der Leitstand 44 aktuell geeignete Parametersätze abrufen kann, wobei diese Einrichtung einen geeigneten Parametersatz entweder gespeichert hat oder eingerichtet und geeignet ist, diesen neu zu berechnen. Die Einrichtung 46 zum Ermitteln eines geeigneten Parametersatzes umfasst beispielsweise einen Prozessor, der unter Nutzung einer KI Berechnungen und Ergebnisse liefert und/oder ist beispielsweise mit dem Internet of Things "IoT" verbunden.

Über das Kommunikationsnetz kann der Leitstand 44 die aktuell aktiven Parametersätze der Schutzgeräte 20 bis 30 beispielsweise auch über die Schutzleittechnik 160 und 162 abrufen und vergleichen. Das Schutzgerät empfängt

über die Schutzleittechnik 160/162 auch Steuer-Befehle vom Leitstand 44 und kann geforderte Informationen liefern. Die Schutzgeräte steuern gemäß der erhaltenen Steuer-Befehle selbst, welche Parametergruppe aktiviert ist oder aktiv geschaltet wird. Die Schutzgeräte empfangen darüber hinaus Strom-Spannungssignale, zeitaufgelöst, so dass vom Schutzgerät über das Auslesen dieser Signale erkennbar ist, ob die Strom-Spannungssignale auf einen Fehler im Netz hinweisen oder nicht. Insbesondere kann das Schutzgerät Parametergruppen auswählen, aktiv schalten und in ausgewählten Parametergruppen die Parametersätze überschreiben.

Als - kurz - "Parametersatz" oder - ausgeschrieben - "Parameterschutzdatensatz" wird die Menge aller - hinsichtlich der Netzzustände adaptiven - Parameter eines Schutzgerätes, z.B. Schutzgeräte 20 bis 30, bezeichnet.

Als "Parametergruppe" wird die Nummer der Gruppe des Schutzgeräts, in den ein Parametersatz gespeichert werden kann, bezeichnet. Mitglieder einer Parametergruppe sind Parameterschutzdatensätze, insbesondere durchnummerierte Speicherplätze im Schutzgerät, die jeweils einen Parameterschutzdatensatz aufnehmen können.

Figur 2 zeigt am Beispiel eines Schutzgerätes mit drei (3) Parametergruppen exemplarisch einige Szenarien sowie Umparametrier- und Umschalte-Prozesse.

Die breit gezogenen Verlaufs-Pfeile 101,102,103 und 104 stellen Zeitpunkte T1 bis T4 dar und verbildlichen damit einen Zeitablauf mit verschiedenen Szenarien und Parametrierzuständen 105 bis 109 des gezeigten Schutzgerätes.

Für den Adaptivschutz durch die Schutzgeräte des Energieversorgungsnetzwerks werden in Schutzgeräten 20 bis 30 mindestens drei Parametergruppen 150, 151 und 152 definiert. Im in Figur 2 gezeigten Ausführungsbeispiel werden in der "Default" Parametergruppe 150 die allgemeingültigen "Default-Schutzparameter" gespeichert.

Die im "Default-Parametersatz" hinterlegten Werte eines Energieversorgungsnetz-werks werden im Rahmen eines beispielhaften Verfahrens gemäß der Erfindung nicht verändert, weil sie als Rückfallebene dienen und die Netzzuverlässigkeit eines Energieversorgungsnetzwerkes 10 für einen Ausfall absichern, wenn beispielsweise die Kommunikation zwischen dem Leitstand 44 und einem oder mehreren der Schutzgeräte 20 bis 30 nicht funktioniert. Alle Schutzgeräte 20 bis 30 sind beispielsweise - siehe Figur 3 und Beschreibung dazu - so konzipiert, dass sie beim Wegfall und/oder einem Fehler in der Kommunikation zwischen Leitstand 44, respektive Einrichtung 46 zum Ermitteln eines geeigneten Parametersatzes und einem oder mehreren der Schutzgeräte 20 bis 30 auf den Default-Modus umschalten.

Darüber hinaus wird die Default-Parametergruppe automatisch aktiviert, wenn über die Kommunikation mit dem Leitstand 44 festgestellt wird, dass die Schutzgeräte nicht koordiniert sind, beispielsweise wenn bei einem oder mehreren Schutzgeräten eines Energieversorgungsnetzwerks die Umschaltung und/oder die Überschreibung auf den aktuell angepassten Parametersatz nicht funktioniert hat. Beispielsweise erkennt der Leitstand und/oder die Einrichtung 46 zum Ermitteln eines geeigneten Parametersatzes mit Mittel zur Kommunikation im Energieversorgungsnetzwerk das und/oder sendet einen entsprechenden Steuerungs-Befehl an alle Schutzgeräte.

Beispielsweise umfassen die "Mittel zur Kommunikation" zwei Kommunikationsnetze innerhalb des Energieversorgungsnetzwerks 10.

Der Leitstand 44 seinerseits registriert ungefähr zeitgleich den Wegfall der Kommunikation mit einem oder mehreren der Schutzgerät(e) 20 bis 30 und kommuniziert an alle noch kommunikativ verbundenen Schutzgeräte, dass auf Default umzuschalten ist, weil die Kommunikation im Energieversorgungsnetzwerk zumindest zum Teil fehlerhaft ist und/oder weggebrochen ist.

Bei dem hier in Figur 2 gezeigten Fall eines Schutzgerätes mit mindestens drei Parametergruppen, wovon die eine die unabänderbare Default-Parametergruppe 150 ist, bleiben noch zwei Parametergruppen 151 und 152, zwischen denen hin- und her geschaltet werden kann und die über die Kommunikation mit dem Leitstand 44 überschreibbar sind.

In diesen zwei Parametergruppen 151 und 152 werden die jeweils für einen Netzzustand spezifischen Schutzparameter gespeichert, den aktiven und einen alternativen. Wenn eine Änderung des Netzzustands, vorliegend zum Zeitpunkt 105, erkannt wird, stellt der Leitstand 44 einen angepassten Schutzparameterdatensatz über die entsprechenden Mittel zur Kommunikation über die Schutzleittechnik 160, 162 - fachnotorisch bekannt, aber hier der Übersichtlichkeit nicht dargestellt - mit dem oder den Schutzgerät(en) zur Verfügung. Dazu ermittelt der Leitstand 44 einen an die Änderung angepassten Parameterschutzdatensatz oder sucht diesen aus der Einrichtung zum Ermitteln eines geeigneten Parametersatzes, insbesondere dort aus der Datenbank des Schutzdatenmanagementsystems heraus.

Das Schutzgerät empfängt den angepassten Parametersatz und speichert ihn lokal in einer Parametergruppe, die weder zu dem Zeitpunkt aktiv ist noch die Default-Parametergruppe ist. Im vorliegenden Fall der nur drei Parametergruppen im Schutzgerät wäre da nur eine Parametergruppe noch zur Auswahl möglich, für den Fall, dass gerade Parametergruppe 151 aktiv ist, wäre das Parametergruppe 152, weil Parametergruppe 150 die Default-Parametergruppe ist. Zum Zeitpunkt 106 ist im vorliegenden Fall dann ein neuer Netzzustand angegeben und die Parametergruppe 152 hat die an den neuen Netzzustand angepassten Parameter. Zum Zeitpunkt 106 werden die in der Parametergruppe 152 vorhandenen Parameter entsprechend überschrieben und die Aktivierung der Parametergruppe 151 stoppt und wird umgeschaltet auf Aktivierung der Parametergruppe 152.

Zur Kommunikation mit dem Leitstand 44 verfügt jedes Schutzgerät 20 bis 30 über eine Schnittstelle mit

angeschlossener Steuerungs- und Kontrollfunktion, in der alle Parametergruppen überwacht werden und wobei der Status der Parametergruppen, ob sie aktiviert sind oder nicht und an welchen Netzzustand angepasste Parameter in den jeweiligen Parametergruppen hinterlegt sind, hinterlegt ist.

Diese Steuerungs- und Kontrollfunktion des in Figur 2 gezeigten Schutzgerätes stellt zum Zeitpunkt 106 nach erfolgreicher Überschreibung der Parametergruppe 152 und nach erfolgreichem Umschalten der Parametergruppen und Aktivierung der Parametergruppe 152 fest, dass die Parametergruppe 151 noch keine an den neuen Netzzustand - Zeitpunkt 105 - angepassten Parameter hat.

Deshalb wird in dem Schutzgerät zum Zeitpunkt T2, 106, zu dem die Parametergruppe 152 aktiv ist, die Parametergruppe 151 mit den an den neuen Netzzustand angepassten Parametern überschrieben, Szenario 102.

In dem in Figur 2 gezeigten Zeitablauf sollte eigentlich zum Zeitpunkt T3,107, nach erfolgter Umschreibung der Parametergruppe 151, im Schutzgerät die Aktivität von der Parametergruppe 152 wieder auf die Parametergruppe 151 umgeschaltet werden.

Allerdings - Szenario 103 - funktioniert dieser Umschalt-Vorgang zur Parametergruppe 151 zum Zeitpunkt T3 nicht. Also entsteht das Szenario, dass die Parametergruppe 151 zwar erfolgreich überschrieben wurde, aber eben die Aktivität des Schutzgerätes nicht auf diese neu überschriebene Parametergruppe umschaltbar ist - Zeitpunkt T4, Szenario 108. Das ist noch kein Fall für die Rückfallebene, sondern es bleibt bei der Aktivität der Parametergruppe 152.

Beispielsweise betrachtet man die Schutzgeräte 20 und 22. Zum Zeitpunkt T3 (102) werden die Parametergruppen der Schutzgeräte 20 und 22 von 152 zur 151 umgeschaltet. Der Umschalt-Vorgang zu 151 der Parametergruppen des Schutzgeräts 20 ist erfolgreich, aber das Umschalten des Schutzgeräts 22 nicht. Eine entsprechende Information, dass in Schutzgerät 20 die Parametergruppe 151 und in Schutzgerät 22 die Parametergruppe 152 aktiviert sind, gelangt über die Mittel zur Kommunikation zum Leitstand 44/46, wobei auch klar ist, dass die Parametergruppe 152 von Schutzgerät 22 nicht umschaltbar ist. Daher kommt dann von dem Leitstand 44/46 der Steuer-Befehl an das Schutzgerät 20, die Parametergruppe im Schutzgerät 20 von 151 auf 152 zurückzuschalten, um die Koordination aller Schutzgeräte im Energieversorgungsnetzwerk beizubehalten.

So als Beispiel der in Figur 2 gezeigten Darstellung funktioniert zum Zeitpunkt T4, respektive 108, die Umschaltung von Parametergruppe 152 zur aktuell überschriebenen Parametergruppe 151 nicht, wie oben beschrieben. Grundsätzlich wird die Umschaltung in die neu überschriebene Parametergruppe 151 versucht, bei Fehlschlag dieses Versuchs wird zum Zeitpunkt T4, bei 108, erstmal in die Parametergruppe 152 in allen Schutzgeräten beibehalten.

Dies ändert sich nach dem Zeitpunkt T4, wie im Szenario 109 dargestellt, zu dem eine oder mehrere Schutzgeräte die kommunikative Verbindung zum Leitstand 44 verlieren. Bei 109, nach Zeitpunkt T4 bricht die Kommunikation der Schutzgeräte innerhalb des Energieversorgungsnetzwerks und mit dem Leitstand 44 zumindest zum Teil, zusammen. Alle Schutzgeräte schalten dann automatisch auf die Default-Parametergruppe 150, das ist das dafür vorgesehene Rückfallebenen-Konzept, bei dem die Default-Parametergruppen der Schutzgeräte, zur Erhaltung der Netzzuverlässigkeit, aktiviert werden.

Bei den Umparametrier- und Umschaltprozessen, wie in Figur 2 gezeigt, sind die Schutzgeräte 20 bis 30 innerhalb eines Energieversorgungsnetzwerkes 10 untereinander und aufeinander abgestimmt und koordiniert.

Im Fall einer erfolgreichen Umparametrierung der nicht aktivierten Parametergruppe 152 läuft ein Umschaltprozess auf die überschriebene Parametergruppe 152 ab.

Figur 3 zeigt ein Beispiel für ein Kommunikationsnetz innerhalb eines Energieversorgungsnetzwerks 10 nach einer beispielhaften Ausführungsform der Erfindung. Vom Leitstand 44 oben, der an die Einrichtung 46 zum Ermitteln eines geeigneten Parametersatzes gekoppelt ist - die Kopplung wird in der Figur durch das Bezugszeichen 44/46 dargestellt - geht ein oder gehen mehrere, insbesondere zwei, Kommunikationsnetz(e) an alle Schutzgeräte. Das Kommunikationsnetz läuft hier über die jeweilige Stationsleittechnik 160 und 162, die ein oder mehrere Schutzgeräte steuert. Falls nun die Kommunikation zwischen Stationsleittechnik 162 und Leitstand 44 Fehler zeigt oder sogar ganz wegbricht - siehe gestrichelte Linie zwischen 44/46 und 162, dann löst das in der Stationsleittechnik 162 aus, dass die an diese Stationsleittechnik angeschlossenen Schutzgeräte 22, 24 - hier nur über Punkte dargestellt - von der Stationsleittechnik 162 das Signal erhalten, den Default-Modus zu aktivieren, im in Figur 2 gezeigten Beispiel wäre das die Parametergruppe 150. Gleichzeitig wird der Leitstand 44/46 den Fehler in der Kommunikation zwischen der Stationsleittechnik 162 und dem Leitstand 44/46 erkennen und über die noch funktionierende Kommunikation - durchgezogene Linie zwischen 44/46 und 160 der Stationsleittechnik 160 diese Information übermitteln, woraufhin die Stationsleittechnik 160 die an sie angeschlossenen Schutzgeräte 20 und 26 instruiert, ebenfalls die Parametergruppe 150 - aus Figur 2 - mit dem Default-Parametersatz zu aktivieren.

Die Kommunikation läuft - wie in Figur 3 dargestellt - vom Leitstand 44 / zu der Stationsleittechnik 160 und 162 und von dort zu den zugeordneten Schutzgeräten 20, 26 und weitere, durch Punkte symbolisiert. Die Kommunikation umfasst insbesondere zwei oder mehr Kommunikationsnetze.

Für den Fall, dass die Anzahl der Parametergruppen innerhalb eines Schutzgerätes größer als das Minimum, also 3, ist, gibt es eine nach einer Ausführungsform der Erfindung eine Reihenfolge, in der die nicht aktiven Parametergruppen eines Schutzgerätes überschrieben werden, damit die Anzahl der Überschreibungen möglichst geringgehalten

wird, weil mit jeder Überschreibung auch ein Risiko eines Fehlers und/oder einer fehlerhaften oder gar nicht erst funktionierenden Aktivierung einhergeht.

Beispielsweise hat nach einer Ausführungsform der Erfindung jeder Parametersatz ein Gewichtung, eine Wertzahl, die die Reihenfolge, mit der dieser Parametersatz überschrieben, bestimmt. Davon ist die Default-Parametergruppe nicht betroffen. Diese bleibt gleich und wird im Betrieb nicht überschrieben, weil damit das Rückfallebenen-Konzept ausgehebelt würde.

Beispielsweise hat jeder Parametersatz ein Gewicht und die Parametergruppe von dem gespeicherten Parametersatz mit dem niedrigsten Gewicht wird durch einen neuen Parametersatz überschrieben.

Ein Beispiel dazu wäre der Fall, dass ein Schutzgerät 4 Parametersätze und 4 Parametergruppen hat. Der Default-Parametersatz ist in Parametergruppe 1 gespeichert und darf nicht geändert werden. Die übrigen 3 der 4 Schutzparameterdatensätze werden in den Parametergruppen 2,3 und 4 mit Parametersätzen a, b und c des Schutzgerätes gespeichert. Es wird angenommen, dass sich die passenden Parametersätze des Schutzgeräts jeden Tag gemäß der folgenden Reihe wiederholen.

| t | 1 | 2 | 3 | 4 | 5 | 6 | 7 | 8 | 9 | 10 | 11 |
|---|---|---|---|---|---|---|---|---|---|---|---|
| passender Parametersatz | a | b | a | b | a | d | c | b | d | c | a |

Die Gewichte der Parametersätze sind:

| Parametersatz | Gewicht |
|---|---|
| a | 4 |
| b | 3 |
| c | 2 |
| d | 2 |

Am Anfang sind die Parametersätze a, b und c in den Parametergruppen 2, 3 und 4 gespeichert. Wenn die Parametrierung gemäß der Ausführungsform mit der Gewichtung der Parametersätze durchgeführt wird, wird das Schutzgerät 5-mal parametriert:

| t | 1 | 2 | 3 | 4 | 5 | 6 | 7 | 8 | 9 | 10 | 11 |
|---|---|---|---|---|---|---|---|---|---|---|---|
| passender Parametersatz | a | b | a | b | a | d | c | b | d | a | c |
| Gespeicherter und **aktivierter** Parametersatz | abc | abc | abc | abc | abc | abd | acd | acb | adb | adb | acb |
| Parametrieren | 0 | 0 | 0 | 0 | 0 | 1 | 1 | 1 | 1 | 0 | 1 |

Die gespeicherten Parametersätze im Zeitpunkt 1 und 11 sind gleich. Wenn die Reihe der passenden Parametersätze nicht geändert wird, wiederholen sich die Umparametrierungen täglich.

Nach einer anderen Ausführungsform werden Netzzustandsänderungen anhand von empirischen und meteorologischen Daten, beispielsweise Belastungen des Energieversorgungsnetzwerkes, die regelmäßig erfolgen, Wettervorhersagen in Bezug auf Energieeinspeisungen in das Energieversorgungsnetzwerk etc. mittels einer KI berechnet und prognostiziert. Ein neuer Parametersatz vom Leitstand wird dann über den als am unwahrscheinlichsten identifizierte Parametersatz geschrieben.

Mit der Annahme der richtigen Prognose, wenn die Um-Parametrierung gemäß dieser Ausführungsform der Erfindung - unter Zuschaltung einer KI und/oder des IoT - durchgeführt wird, wird das Schutzgerät nur 3-mal parametriert:

| | Tag 1 | | | | | | | | | | |
|---|---|---|---|---|---|---|---|---|---|---|---|
| t | 1 | 2 | 3 | 4 | 5 | 6 | 7 | 8 | 9 | 10 | 11 |
| passender Parametersatz | a | b | a | b | a | d | c | b | d | a | c |
| Gespeicherter und aktivierter Parametersatz | **a**bc | a**b**c | **a**bc | a**b**c | **a**bc | a**d**c | ad**c** | **b**dc | b**d**c | **a**dc | ad**c** |
| Parametrieren | 0 | 0 | 0 | 0 | 0 | 1 | 0 | 1 | 0 | 1 | 0 |

| | Tag 2 | | | | | | | | | | |
|---|---|---|---|---|---|---|---|---|---|---|---|
| t | 1 | 2 | 3 | 4 | 5 | 6 | 7 | 8 | 9 | 10 | 11 |
| passender Parametersatz | a | b | a | b | a | d | c | b | d | a | c |
| Gespeicherter und aktivierter Parametersatz | **a**dc | ad**b** | **a**db | ad**b** | **a**db | a**d**b | **c**db | cd**b** | c**d**b | cd**a** | **c**da |
| Parametrieren | 0 | 1 | 0 | 0 | 0 | 0 | 1 | 0 | 0 | 1 | 0 |

Am zweiten Tag sind die gespeicherten Parametersätze im Zeitpunkt 1 und 11 gleich. Wenn die Reihe von dem passenden Parametersatz nicht geändert wird, wird die Parametrierung wiederholt werden.

In dem Beispiel kann man sehen, dass das Verfahren über die Gewichtung 5-mal Umparametrierungen erfordert, aber das Verfahren über die Prognose nur 3-mal Umparametrierungen pro Tag braucht.

Entsprechend bringt das Verfahren über Gewicht keinen Vorteil im Hinblick auf die Reduzierung der Anzahl der Parametrierung, sondern ist vor allem bezüglich der Datensicherheit und Unabhängigkeit von falschen Prognosen dem zweiten Ausführungsbeispiel, das über Prognosen mittels einer KI funktioniert, überlegen.

Bei dem zweiten Ausführungsbeispiel sollen beispielsweise die nächsten m möglichen Netzzustände prognostiziert werden, bis die Summe der Parametrierung gleich n-3 ist. z. B. Am zweiten Tag im Zeitpunkt 2 sind 4 weitere bis sechste mögliche Netzzustände prognostiziert. Am zweiten Tag im Zeitpunkt 7 braucht nur ein weiterer Netzzustand prognostiziert werden.

Dabei wird beispielsweise ein rekurrentes neuronales Netzwerk eingesetzt, um vorherzusagen, welche Netzzustände (Netztopologien) z.B. aufgrund der Grundlast und der regionalen Entwicklung des Wetters (Wind und Sonne), Ladezustände größerer Speicher und Verfügbarkeit größerer flexibler Lasten im Netz am wahrscheinlichsten sind.

Die aktuelle Last ist abhängig von der Zeit und der vorherigen Last:

$$S_t = f(X_t, S_{t-1}),$$

deswegen wird beispielsweise ein rekurrentes neuronales Netzwerk für die Prognose verwendet.

Die Vektor-Darstellung dieses Zusammenhangs - siehe Formel oben - ist:

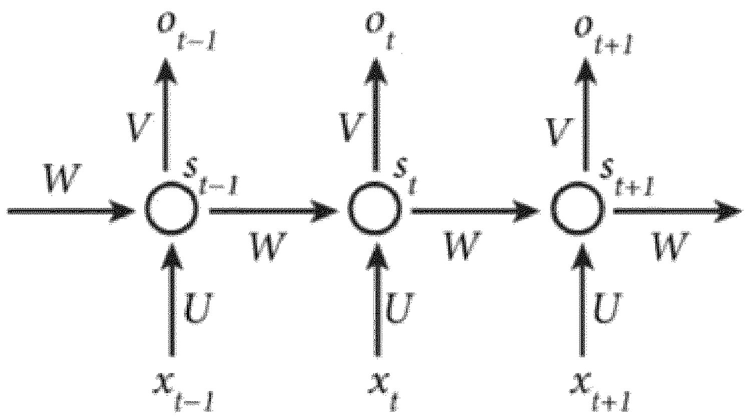


Vektor-Darstellung eines RNN "recurrent neural network" mit

U, V, W = Gewichtungen
$O_t$ = Der Netzzustand am Zeitpunkt t
$S_t$ = $O_t$ (start)
$X_t$ = Die Angabe (z. B. Grundlast und der regionalen Entwicklung des Wetters (Wind und Sonne), Ladezustände größerer Speicher und Verfügbarkeit größerer flexibler Lasten) am Zeitpunkt t. Die Werte können separat prognostiziert werden.

Die dazu gehörigen Schutzparameterdatensätze werden in den Parametergruppen 2 ... *n* der koordinierten Schutzgeräte gespeichert. Im Fall einer Netzzustandsänderung wird dementsprechend geprüft, ob und in welcher Parametergruppe $2 \leq k \leq n$ für den Fingerprint des neuen Netzzustandes in den Schutzgeräten bereits Schutzparameterdatensätze hinterlegt sind. Wenn das der Fall ist, reicht eine einfache Umschaltung der aktivierten Parametergruppe auf k, wenn nicht, ist die als am unwahrscheinlichsten eintretende Parametergruppe mit zu dem Fingerprint passenden

Schutzparametern zu überschreiben, bevor umgeschaltet wird.

Die Stabilität und die Zuverlässigkeit eines Energieversorgungs-Netzwerks werden durch die Erfindung konkret verbessert, weil passend zu einem Netzzustand die Schutzgeräte automatisch adaptiv parametriert werden. Die Erfindung stellt dazu eine Technik zur Verfügung, mit der zum einen über eine geeignete KI zutreffende Prognosen erstellt und daraus aktuell angepasste Parametersätze berechnet werden und zum zweiten über eine Kommunikation eine dem aktuellen Netzzustand direkt angepasste Parametrierung automatisiert in den jeweiligen Schutzgeräten erfolgt.

Das ist ein erheblicher Vorteil gegenüber dem bisher üblichen, manuellen Umparametrieren von Parametergruppen innerhalb eines Schutzgerätes.

Bezugszeichenliste

| | |
|---|---|
| 10 | Energieversorgungsnetzwerk |
| 20, 22, 24, | Schutzgerät |
| 26, 28, 30 | Schutzgerät |
| 32, 34, 36, | Schaltgerät |
| 38, 40, 42 | Schaltgerät |
| 44 | Leitstand |
| 46 | Einrichtung zum Ermitteln eines geeigneten Parametersatzes |
| 101 | Zeitpunkt T1 |
| 102 | Zeitpunkt T2 |
| 103 | Zeitpunkt T3 |
| 104 | Zeitpunkt T4 |
| 105 | Szenario zum Zeitpunkt T1 |
| 106 | Szenario zum Zeitpunkt T2 |
| 107 | Szenario zum Zeitpunkt T3 |
| 108 | Szenario zum Zeitpunkt T4 |
| 109 | Szenario nach Zeitpunkt T4 |
| 150 | Default Parametergruppe |
| 151 | Parametergruppe |
| 152 | Parametergruppe |
| 160,162 | Stationsleittechnik |

**Patentansprüche**

**1.** Verfahren zur Parametrierung von Schutzgeräten eines Energieversorgungsnetzwerks (10) derart, dass an einen Leitstand (44) des Energieversorgungsnetzwerks (10) eine Mehrzahl von Einrichtungen (12,14,16,18) angeschlossen ist, von denen wenigstens eine (12,14,16,18) Energie vom Energieversorgungsnetzwerk empfängt und wenigstens eine (12,14,16,18) Energie an das Energieversorgungsnetzwerk abgibt, und welches (10) eine Mehrzahl von Schaltgeräten (32, 34, 36, 38, 40, 42) zum Steuern der Energieverteilung innerhalb des Energieversorgungsnetzwerks (10) aufweist, wobei Schaltzustände der Schaltgeräte (32, 34, 36, 38, 40, 42) zu einem vorgegebenem Zeitpunkt (101,102,103,104) einen jeweiligen Netzzustand des Energieversorgungsnetzwerks (10) ergeben, wobei eine Mehrzahl von Schutzgeräten (20, 22, 24, 26, 28, 30) für die Schaltgeräte (32, 34, 36, 38, 40, 42) vorgesehen sind und jedes Schutzgerät (20, 22, 24, 26, 28, 30) für den jeweiligen Netzzustand des Energieversorgungsnetzwerks (10) einen Netzzustands-spezifischen Parametersatz nutzt, um für diesen Netzzustand eine gewünschte Schutzfunktion durch das jeweilige Schutzgerät (20, 22, 24, 26, 28, 30) zu gewährleisten,
**dadurch gekennzeichnet, dass**

in dem jeweiligen Schutzgerät (20, 22, 24, 26, 28, 30) zumindest drei Parametergruppen (150,151,152), in denen jeweils Parametersätze gespeichert sind, definiert sind,
wobei eine Parametergruppe (150) als Default-Parametergruppe eine Rückfallebene abbildet und zumindest zwei weitere Parametergruppen (151,152) im Schutzgerät (20, 22, 24, 26, 28, 30) vorgesehen sind, wobei im Energieversorgungsnetzwerk nur eine Parametergruppe (150,151,152) aktiv ist und die Schutzgeräte (20, 22, 24, 26, 28, 30), mittels Kommunikation zu dem Leitstand (44), von dort, gegebenenfalls über die Einrichtung (46) zum Ermitteln eines geeigneten Parametersatzes einen aktuell adaptierten Parametersatz und/oder den Steuer-Befehl zur aktiv-Schaltung einer bereits im Schutzgerät vorhandener Parametergruppe (151, 152) empfangen und in einem darauf folgenden optionalen Verfahrensschritt eine inaktive Parametergruppe, außer der Default-Parametergruppe, damit überschreiben und nach gegebenenfalls erfolgter Überschreibung der Parametergruppe (151,152) im Schutzgerät (20, 22, 24, 26, 28, 30) auf die Parametergruppe (151, 152) umgeschaltet wird, die den vom Leitstand (44) als geeignet kommunizierten Parametersatz enthält.

**2.** Verfahren nach Anspruch 1, wobei die Kommunikation innerhalb des Energieversorgungsnetzwerkes (10) so ausgebildet ist, dass bei jeder fehlerhafter und/oder ausfallender Kommunikation mit dem Leitstand (44, 46) von allen Schutzgeräten (20, 22, 24, 26, 28, 30) des gesamten Energieversorgungsnetzwerkes (10) die Default-Parametergruppe (150) mit einem Rückfall-Parametersatz aktiv geschaltet wird.

**3.** Verfahren nach einem der Ansprüche 1 oder 2, bei dem die Default-Parametergruppe mit dem Rückfall-Parametersatz nicht überschreibbar ist.

**4.** Verfahren nach einem der vorhergehenden Ansprüche, bei dem bei jedem Parametersatz eine Gewichtung zugeordnet wird, derart, dass die Gewichtung die Reihenfolge, mit der dieser Parametersatz überschrieben wird, bestimmt.

**5.** Verfahren nach einem der vorhergehenden Ansprüche, bei dem der Leitstand (44) eine Einrichtung (46) zum Ermitteln eines geeigneten Parametersatzes umfasst, die geeignet ist, eine Prognose für die am wahrscheinlichsten zu erwartenden Netzzustände zu ermitteln.

**6.** Verfahren nach einem der vorhergehenden Ansprüche, bei dem eine Kommunikationsvorrichtung betrieben wird, in der kontinuierlich ein Abgleich zwischen den aktuellen Netzzuständen und den aktivierten Parametergruppen durchgeführt wird.

**7.** Verfahren nach Anspruch 6, das in zeitlich in regelmäßigen Abständen durchgeführt wird.

**8.** Verfahren nach einem der vorhergehenden Ansprüche, bei dem der Leitstand (44) von der Einrichtung (46) zum Ermitteln eines geeigneten Parametersatzes einen Parametersatz abruft.

**9.** Verfahren nach einem der vorhergehenden Ansprüche, bei dem der Leitstand (44) vor dem Bereitstellen und Absenden eines geeigneten Parametersatzes prüft, ob in den Schutzgeräten (20, 22, 24, 26, 28, 30) der geeignete und Netzzustands-spezifische Parametersatz vorhanden ist.

**10.** Verfahren nach einem der vorhergehenden Ansprüche, bei dem die Einrichtung (46) zum Ermitteln eines geeigneten Parametersatzes prüft, ob in dem Schutzdatenmanagement ein für den aktuellen Netzzustand geeigneter Parametersatz hinterlegt ist.

**11.** Vorrichtung zum Ermitteln und Weiterleiten von Parametersätzen für Schutzgeräte (20, 22, 24, 26, 28, 30) eines Energieversorgungsnetzwerkes (10), an welches eine Mehrzahl von Einrichtungen (12,14,16,18) angeschlossen ist, von denen wenigstens eine Energie vom Energieversorgungsnetzwerk (10) empfängt und wenigstens eine Energie an das Energieversorgungsnetzwerk (10) abgibt, und welches eine Mehrzahl von Schaltgeräten (32, 34, 36, 38, 40, 42) zum Steuern einer Energieverteilung innerhalb des Energieversorgungsnetzwerks (10) aufweist, wobei Schaltzustände der Schaltgeräte (32, 34, 36, 38, 40, 42) zu einem vorgegebenem Zeitpunkt einen jeweiligen Netzzustand des Energieversorgungsnetzwerks (10) bilden, wobei jedes Schutzgerät (20, 22, 24, 26, 28, 30) für einen jeweiligen Netzzustand des Energieversorgungsnetzwerks (10) einen Netzzustandsspezifischen Parametersatz nutzt, um für diesen Netzzustand eine gewünschte Schutzfunktion durch das jeweilige Schutzgerät (20, 22, 24, 26, 28, 30) zu gewährleisten,
**dadurch gekennzeichnet, dass**
die Vorrichtung die Mittel hat und geeignet ist, eine Datenbank mit Parametersätzen zu berechnen und aufzubauen, den Inhalt der Datenbank von Parametersätzen des Energieversorgungsnetzwerks (10), die anhand von Prognosen vorausberechnet sind, einem Leitstand (44) des Energieversorgungsnetzwerks (10) einerseits und den Schutzgeräten (20, 22, 24, 26, 28, 30) des Energieversorgungsnetzwerks (10) andererseits, bereitzustellen, wobei die Mittel zur Berechnung und zum Aufbau der Parametersätze der Datenbank in regelmäßigen Zeitabständen Ergebnisse von Prognosen empfängt, die wahrscheinliche Netzzustände und entsprechend dazu passende Parametersätze betreffen.

**12.** Vorrichtung, die zur Durchführung des Verfahrens nach einem der Ansprüche 1 bis 10 geeignet ist.

13. Vorrichtung nach einem der Ansprüche 11 oder 12, die Mittel zur Kommunikation umfasst, mit denen der Leitstand (44) des Energieversorgungsnetzwerks (10), eine Einrichtung (46) zur Ermittlung eines geeigneten Parametersatzes, Stationsleittechnik(160, 162) Schaltgeräte (32, 34, 36, 38, 40, 42), sowie Schutzgeräte (20, 22, 24, 26, 28, 30) verbinden.

14. Vorrichtung nach einem der Ansprüche 11 bis 13, wobei Mittel zur Kommunikation vorgesehen sind, die das Energieversorgungsnetzwerk (10) mit einem Schutzdatenmanagement-System, beispielsweise in der Einrichtung zur Ermittlung eines geeigneten Parametersatzes enthalten, verbinden.

15. Vorrichtung nach einem der Ansprüche 11 bis 14, wobei die Einrichtung (46) zur Ermittlung eines geeigneten Parametersatzes einen Prozessor umfasst, der eingerichtet und geeignet ist, eine Künstliche Intelligenz zur Ermittlung eines aktuell geeigneten Parametersatzes einzusetzen.

FIG 1

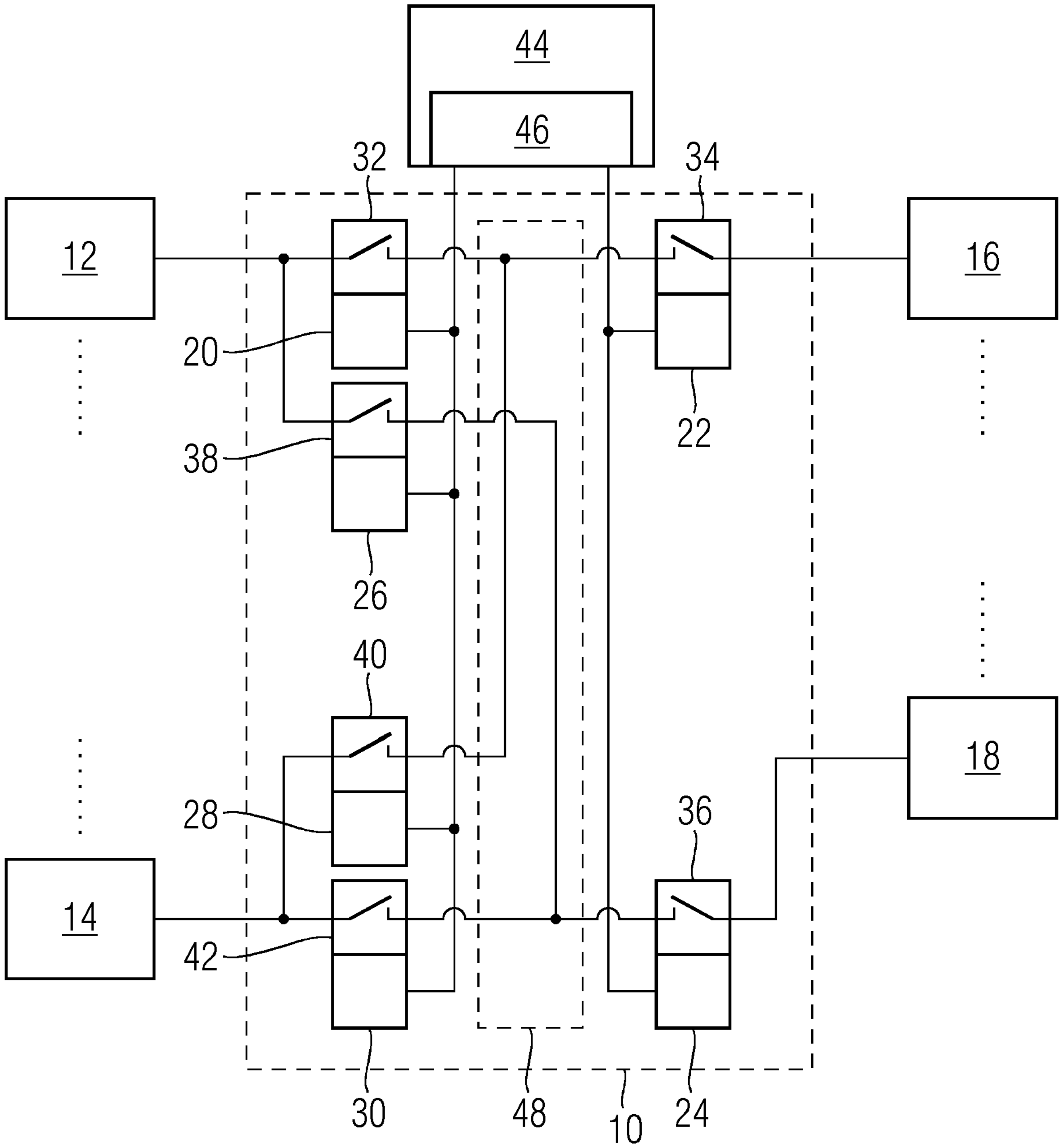

FIG 2

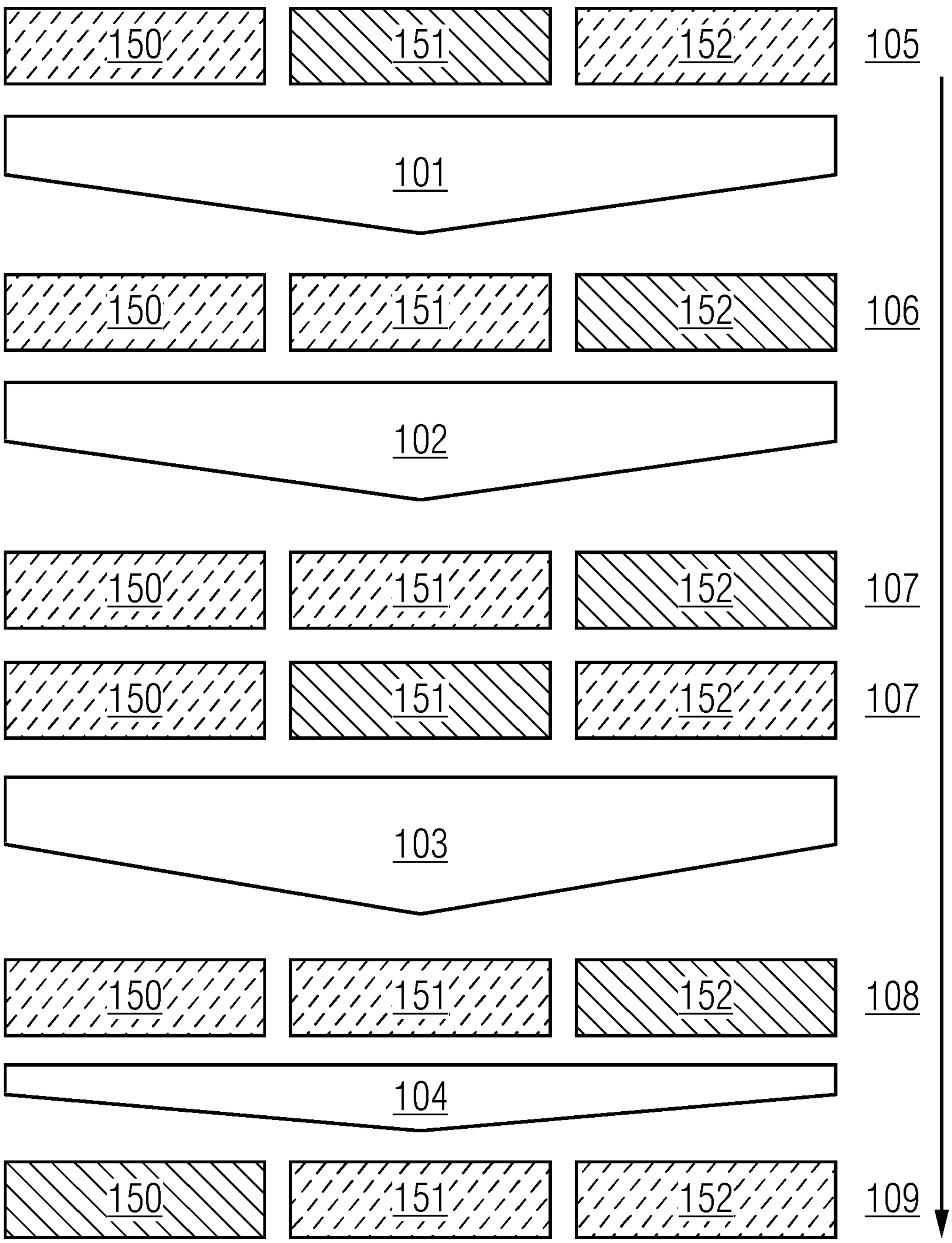
150
151
152
105
101
150
151
152
106
102
150
151
152
107
150
151
152
107
103
150
151
152
108
104
150
151
152
109

FIG 3

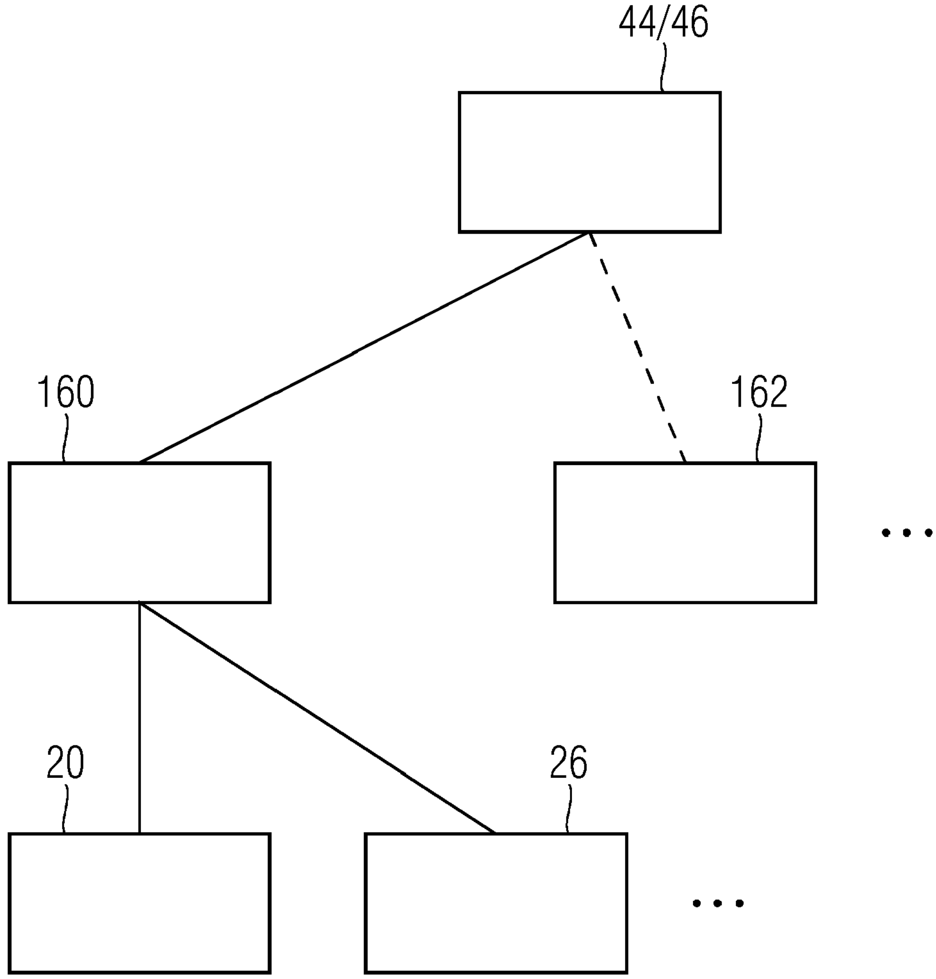

Europäisches Patentamt
European Patent Office
Office européen des brevets

# EUROPÄISCHER RECHERCHENBERICHT

Nummer der Anmeldung
EP 24 17 3280

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 9 787 080 B2 (EATON CORP [US]) 10. Oktober 2017 (2017-10-10) | 1-4, 6-10, 12-15 | INV. H02H1/00 H02H3/00 H02H7/26 |
| A | * Zusammenfassung; Abbildungen 1,2,3,4,6,7a,7b * * Spalte 1, Zeile 44 - Spalte 2, Zeile 12 * * Spalte 3, Zeile 39 - Spalte 8, Zeile 42 * | 5,11 | |
| X | EP 2 194 656 B1 (ABB RESEARCH LTD [CH]) 25. Juni 2014 (2014-06-25) | 11,13-15 | |
| Y | * Zusammenfassung; Abbildungen 1-12 * * Absätze [0001], [0004] - [0007], | 1-3, 5-10,12 | |
| A | [0011] - [0018], [0023] - [0025], [0033] - [0061], [0065], [0070], [0078], [0079], [0088], [0090] * | 4 | |
| Y | US 5 132 867 A (KLANCHER FRANK [US]) 21. Juli 1992 (1992-07-21) * Spalte 1, Zeilen 18-24 * * Spalte 1, Zeile 65 - Spalte 2, Zeile 67 * | 1-3, 5-10,12 | |
| Y | US 2003/193767 A1 (VICENTE NATANIEL B [US] ET AL) 16. Oktober 2003 (2003-10-16) * Absatz [0017] * | 1-3, 5-10,12 | |
| X | EP 3 107 174 A1 (SIEMENS AG [DE]) 21. Dezember 2016 (2016-12-21) | 11,13-15 | |
| Y | * Absätze [0006], [0011], [0012], [0019] - [0022], [0030], [0031], [0041] * | 5 | |

RECHERCHIERTE SACHGEBIETE (IPC)
H02H

Der vorliegende Recherchenbericht wurde für alle Patentansprüche erstellt

1

| Recherchenort | Abschlußdatum der Recherche | Prüfer |
|---|---|---|
| München | 16. Oktober 2024 | Palukova, Mila |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 24 17 3280

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-10-2024

| Im Recherchenbericht angeführtes Patentdokument | Datum der Veröffentlichung | Mitglied(er) der Patentfamilie | Datum der Veröffentlichung |
|---|---|---|---|
| US 9787080 B2 | 10-10-2017 | KEINE | |
| EP 2194656 B1 | 25-06-2014 | CN 102239645 A | 09-11-2011 |
| | | EP 2194656 A1 | 09-06-2010 |
| | | US 2011282507 A1 | 17-11-2011 |
| | | WO 2010063816 A1 | 10-06-2010 |
| US 5132867 A | 21-07-1992 | KEINE | |
| US 2003193767 A1 | 16-10-2003 | KEINE | |
| EP 3107174 A1 | 21-12-2016 | KEINE | |

EPO FORM P0461

Für nähere Einzelheiten zu diesem Anhang : siehe Amtsblatt des Europäischen Patentamts, Nr.12/82